# EUROPEAN PATENT SPECIFICATION

(11) **EP 4 136 041 B1**
(45) Date of publication and mention of the grant of the patent: **18.12.2024**
(21) Application number: 21717871.4
(22) Date of filing: 09.04.2021
(51) Int. Cl.: B65G 1/04

(54) **CONTAINER HANDLING VEHICLE COMPRISING A CONTAINER CARRYING POSITION, ASSOCIATED SYSTEM AND METHODS**
BEHÄLTERHANDHABUNGSFAHRZEUG MIT EINER BEHÄLTERTRAGENDEN POSITION, ZUGEHÖRIGES SYSTEM UND VERFAHREN
VÉHICULE DE MANUTENTION DE CONTENEURS COMPRENANT UNE POSITION DE TRANSPORT DE CONTENEURS, SYSTÈME ET MÉTHODES ASSOCIÉS

(30) Priority: 16.04.2020 NO 20200467; 25.05.2020 NO 20200612; 05.06.2020 NO 20200672
(43) Date of publication of application: 22.02.2023
(60) Divisional application: 24212533.4
(73) Proprietor: AUTOSTORE TECHNOLOGY AS, 5578 Nedre Vats (NO)
(72) Inventor: DJUVE, HEGGEBØ, Jørgen, 5580 ØLEN (NO)
(74) Representative: Kilburn & Strode LLP
(86) International application number: PCT/EP2021/059309
(87) International publication number: WO 2021/209337

(56) References cited:
- WO-A1-2006/095047
- WO-A1-2019/137870
- WO-A1-2019/238703
- WO-A1-2020/151866

## Description

### FIELD OF THE INVENTION

The invention relates to the field of automated storage and retrieval systems. In particular, the invention relates to a container handling vehicle with a cantilever section and an automated storage and retrieval system comprising a plurality of the container handling vehicles, where the container handling vehicles have at least one additional storage position thereon compared to prior art container handling vehicles of the cantilever type. It is further described methods of transferring a storage container between a first and second container handling vehicle as well as transferring a storage container between a container handling vehicle and an external container carrying position.

### BACKGROUND AND PRIOR ART

Document WO2019/137870 describes, in accordance with its abstract, an automated storage and retrieval system comprising a container handling vehicle comprising a transport mechanism for transport of the vehicle on the rail system. The container handling vehicle further comprises a lifting assembly for picking up storage containers from storage columns to a position above the lowest level of the transport mechanism, wherein the lifting assembly comprises a lifting frame connectable to a storage container, a first lifting shaft and a second lifting shaft of equal or near equal diameter. The first and second lifting shafts are mainly parallel, and each of the first and second lifting shafts are supported in an upper portion of the vehicle. Two lifting elements extend from each of the first and second lifting shafts to the lifting frame, a motor drive assembly comprising at least a first motor, wherein the at least first motor encircles one of the lifting shafts. A force transferring assembly rotatably connects the first and second lifting shafts via a force transferring element It further describes a container handling vehicle as well as method of operating the automated storage and retrieval system.

Document WO2019/238703 describes, in accordance with its abstract, a storage system comprising a storage grid comprising vertical column profiles defining a plurality of grid columns, the grid columns comprising storage columns, in which storage containers can be stored one on top of another in vertical stacks. The storage grid comprises at least one rail grid at the upper ends of the column profiles, a first container handling vehicle and a second container handling vehicle, the first and the second container handling vehicles each comprising at least one wheel base unit and a first container handling module or a second container handling module, respectively, connected to the wheel base unit. Each wheel base unit has a wheel arrangement for movement of the wheel base unit in two perpendicular directions upon a rail grid of the storage system, and a horizontal periphery fitting within the horizontal area defined by a grid cell of the rail grid such that wheel base units may pass each other on any adjacent grid cells of the rail grid, each of the wheel base units comprises an upper surface configured as a connecting interface for connection to any of the first and second container handling modules, and the first container handling module is a different type of container handling module to the second container handling module.

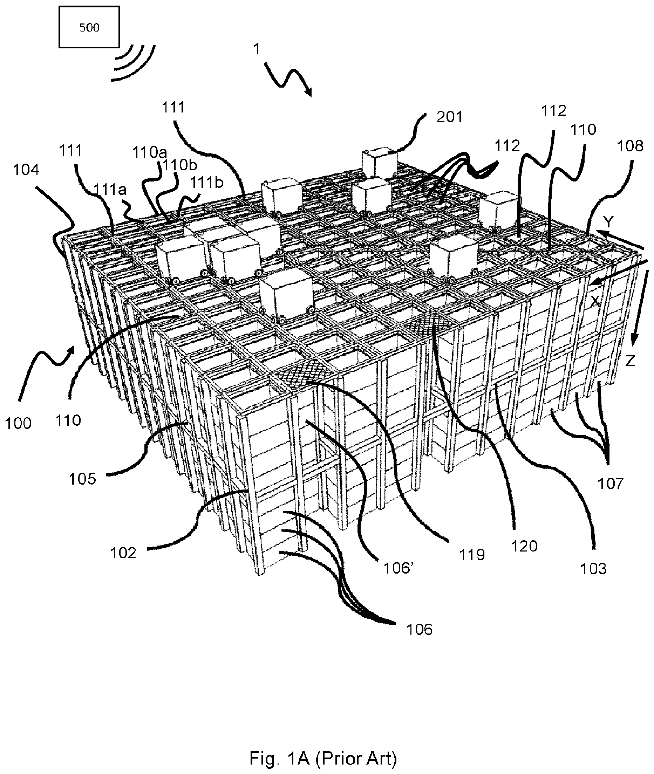

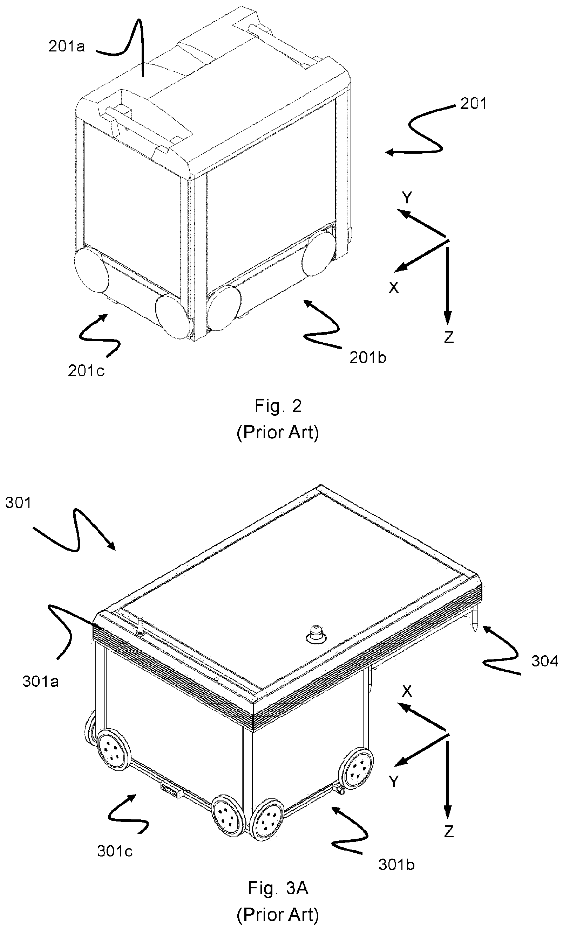

Fig. 1A discloses a typical prior art automated storage and retrieval system 1 with a framework structure 100 and Fig. 2 and 3A discloses two different prior art container handling vehicles 201,301 suitable for operating on such a system 1.

The framework structure 100 comprises upright members 102, horizontal members 103 and a storage volume comprising storage columns 105 arranged in rows between the upright members 102 and the horizontal members 103. In these storage columns 105 storage containers 106, also known as bins, are stacked one on top of one another to form stacks 107. The members 102, 103 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301 are operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301 in a first direction X across the top of the frame structure 100, and a second set of parallel rails 111 arranged perpendicular to the first set of rails 110 to guide movement of the container handling vehicles 201,301 in a second direction Y which is perpendicular to the first direction X. Containers 106 stored in the columns 105 are accessed by the container handling vehicles through access openings/ grid openings 112 in the grid cells 122 in the rail system 108. The container handling vehicles 201,301 can move laterally above the storage columns 105, i.e. in a plane which is parallel to the horizontal X-Y plane.

The upright members 102 of the framework structure 100 may be used to guide the storage containers during raising of the containers out from and lowering of the containers into the columns 105. The stacks 107 of containers 106 are typically self-supportive.

Each prior art container handling vehicle 201,301 comprises a vehicle body 201a,301a, and first and second sets of wheels 201b,301b,201c,301c which enable the lateral movement of the container handling vehicles 201,301 in the X direction and in the Y direction, respectively. In Fig. 2 and 3A two wheels in each set are fully visible. The first set of wheels 201b,301b is arranged to engage with two adjacent rails of the first set 110 of rails, and the second set of wheels 201c,301c is arranged to engage with two adjacent rails of the second set 111 of rails. At least one of set wheels 201b,301b,201c,301c can be lifted and lowered, so that the first set of wheels 201b,301b and/or the second set of wheels 201c,301c can be engaged with the respective set of rails 110, 111 at any one time.

Each prior art container handling vehicle 201,301 also comprises a lifting device (not shown) for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301 so that the position of the gripping / engaging devices with respect to the vehicle 201,301 can be adjusted in a third direction Z which is orthogonal the first direction X and the second direction Y. Parts of the gripping device of the container handling vehicle 301 is shown in in fig. 3A and is indicated with reference number 304. The gripping device of the container handling device 201 is located within the vehicle body 301a in Fig. 2.

Conventionally, and also for the purpose of this application, Z=1 identifies the uppermost layer of storage containers, i.e. the layer immediately below the rail system 108, Z=2 the second layer below the rail system 108, Z=3 the third layer etc. In the exemplary prior art disclosed in Fig. 1A, Z=8 identifies the lowermost, bottom layer of storage containers. Similarly, X=1...n and Y=1...n identifies the position of each storage column 105 in the horizontal plane. Consequently, as an example, and using the Cartesian coordinate system X, Y, Z indicated in Fig. 1A, the storage container identified as 106' in Fig. 1A can be said to occupy storage position X=10, Y=2, Z=3. The container handling vehicles 201,301 can be said to travel in layer Z=0, and each storage column 105 can be identified by its X and Y coordinates.

The storage volume of the framework structure 100 has often been referred to as a grid 104, where the possible storage positions within this grid is referred to as a storage cell. Each storage column may be identified by a position in an X- and Y-direction, while each storage cell may be identified by a container number in the X-, Y and Z-direction.

Each prior art container handling vehicle 201,301 comprises a storage compartment or space for receiving and stowing a storage container 106 when transporting the storage container 106 across the rail system 108. The storage space may comprise a cavity arranged centrally within the vehicle body 201a as shown in Fig. 2 and as described in e.g. WO2015/193278A1.

Fig. 3A shows an alternative configuration of a container handling vehicle 301 with a cantilever construction. Such a vehicle is described in detail in e.g. NO317366 or e.g. WO2019/137870A1.

The central cavity container handling vehicles 201 shown in Fig. 2 may have a footprint that covers an area with dimensions in the X and Y directions which is generally equal to the lateral extent of a storage column 105, e.g. as is described in WO2015/193278A1. The term 'lateral' used herein may mean 'horizontal'.

Alternatively, the central cavity container handling vehicles 101 may have a footprint which is larger than the lateral area defined by a storage column 105, e.g. as is disclosed in WO2014/090684A1.

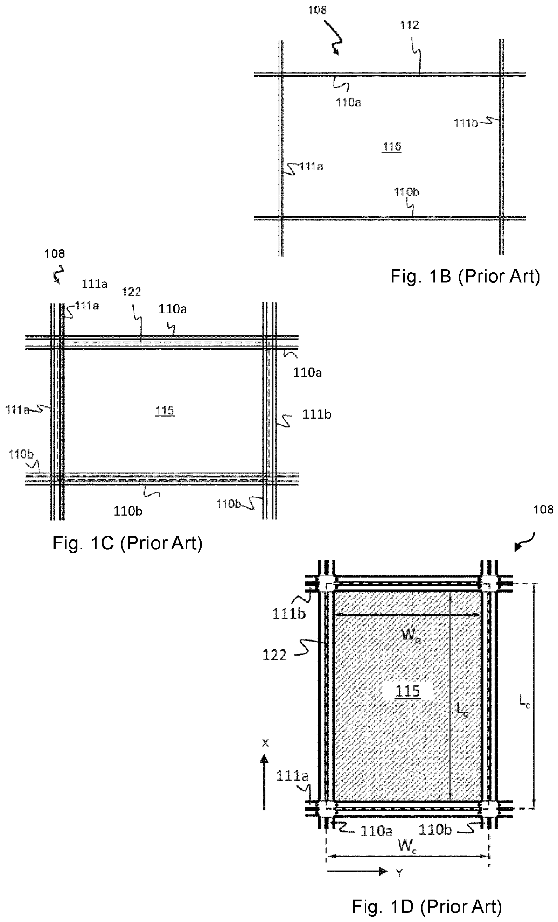

The rail system 108 typically comprises rails with grooves into which the wheels of the vehicles are inserted. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks (so-called "double tracks" which is described in relation to Figs. 1B-1D below).

WO2018146304 illustrates a typical configuration of rail system 108 comprising rails and parallel tracks in both X and Y directions.

In the framework structure 100, a majority of the columns 105 are storage columns 105, i.e. columns 105 where storage containers 106 are stored in stacks 107. However, some columns 105 may have other purposes. In fig. 1A, columns 119 and 120 are such special-purpose columns used by the container handling vehicles 201,301 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a `port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. Note that the term 'tilted' means transportation of storage containers 106 having a general transportation orientation somewhere between horizontal and vertical.

In fig. 1A, the first port column 119 may for example be a dedicated drop-off port column where the container handling vehicles 201,301 can drop off storage containers 106 to be transported to an access or a transfer station, and the second port column 120 may be a dedicated pick-up port column where the container handling vehicles 201,301 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1.

When a storage container 106 stored in one of the columns 105 disclosed in Fig. 1A is to be accessed, one of the container handling vehicles 201,301 is instructed to retrieve the target storage container 106 from its position and transport it to the drop-off port column 119. This operation involves moving the container handling vehicle 201,301 to a location above the storage column 105 in which the target storage container 106 is positioned, retrieving the storage container 106 from the storage column 105 using the container handling vehicle's 201,301 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles specifically dedicated to the task of temporarily removing storage containers from a storage column 105. Once the target storage container 106 has been removed from the storage column 105, the temporarily removed storage containers can be repositioned into the original storage column 105. However, the removed storage containers may alternatively be relocated to other storage columns.

When a storage container 106 is to be stored in one of the columns 105, one of the container handling vehicles 201,301 is instructed to pick up the storage container 106 from the pick-up port column 120 and transport it to a location above the storage column 105 where it is to be stored. After any storage containers positioned at or above the target position within the storage column stack 107 have been removed, the container handling vehicle 201,301 positions the storage container 106 at the desired position. The removed storage containers may then be lowered back into the storage column 105, or relocated to other storage columns.

It is a drawback with the prior art container handling vehicles of the cantilever type that they can only transport one storage container at the time.

One objective of the invention is to provide a container handling vehicle of the cantilever type that can transport more than one storage container at the time.

### SUMMARY OF THE INVENTION

The invention is set forth in the independent claims while the dependent claims describe alternatives of the invention.

The invention relates to a container handling vehicle for operation on a two-dimensional rail system comprising a first set of parallel rails arranged to guide movement of container handling vehicles in a first direction X across the top of the frame structure, and a second set of parallel rails arranged perpendicular to the first set of rails to guide movement of the container handling vehicles in a second direction which is perpendicular to the first direction, the first and second sets of parallel rails dividing the rail system into a plurality of grid cells, wherein the container handling vehicle comprises:
- a wheel base unit comprising first and second sets of wheels for guiding the container handling vehicle along the rail system in the first and second directions respectively, wherein the first and second sets of wheels form outer peripheries of the wheel base unit;
- a body unit comprising:
   a lower section which is provided on the wheel base unit, the lower section having a footprint with a horizontal extent which is equal to or less than the wheel base unit, the lower section having an upper surface, wherein the upper surface provides a first container carrying position for carrying a storage container;
   a support section extending vertically from the lower section, the support section having a footprint with a horizontal extent which is smaller than the footprint of the lower section; and
   a cantilever section extending horizontally from the support section beyond the footprint of the lower section; and
- a lifting device comprising a lifting frame that is suspended from the cantilever section.

In an aspect, when a storage container is positioned on the upper surface, an uppermost part of the storage container represents a first height; and the lifting device comprises a lifting frame that is suspended from the cantilever section, the lifting frame having a lowermost part at a second height when the lifting frame is docked in an upper position adjacent the cantilever section; wherein the second height, when the lifting frame is docked in its upper position, is above the first height, such that the lowermost part of a docked lifting frame of a first container handling vehicle can pass over the uppermost part of a storage container positioned on the upper surface of a lower section of the body unit of a second container handling vehicle when the first and second container vehicles pass one another on adjacent grid cells.

Other robots or human operator(s) can handle/pick items stored in the storage container positioned on the first container carrying position. I.e. the storage container positioned on the first container carrying position could thus make for a useful place to hold items that need regular access. At the same time it also provides a useful counterbalance for the vehicle when it needs to pick up heavy storage containers.

The first container carrying position may be recessed to provide sideways support for a storage container positioned on the first container carrying position.

The lifting device may comprise a lifting device motor and at least two lifting shafts, and wherein the at least two lifting shafts may be arranged in the cantilever section and the lifting device motor may be arranged in the lower section, and wherein the lifting device motor and at least two lifting shafts may be connected to each other via a drive coupling. The drive coupling may comprise any necessary components to transfer rotational movement from the lifting device motor and the lifting shafts.

The lifting device may comprise a lifting device motor and at least two lifting shafts arranged in the cantilever section.

The body unit may comprise an S-shaped housing linking the lower section, the support section and the cantilever section together. The S-shape is the shape that is seen when the housing is viewed from the side.

The first container carrying position may comprise a conveyor for transferring a storage container between the first container carrying position and an external support. The external support may be an external conveyor. In order to ease transfer of storage containers, an upper surface of the external support is preferably at the same height as an upper surface of the conveyor on the first container carrying position.

A footprint of the lower section of the body unit may be displaced with respect to the footprint of the wheel base unit by substantially or equally a width of a wheel. Footprint shall in this instance be understood as that the vertical projection of the lower section does not step into an adjacent grid cell when the lower section is arranged directly above a grid cell.

The lifting frame may be suspended on lifting bands, and the lifting frame may extend horizontally and comprise gripping devices and corner guides, where a lowermost point of the corner guides may provide the lowermost part of the lifting frame. The lifting bands are preferably electrically and/or signally conductive such that power and instructions can be provided to the gripping devices on the lifting frame.

It is further described an automated storage and retrieval system comprising a two-dimensional rail system comprising a first set of parallel rails arranged to guide movement of container handling vehicles in a first direction X across the top of the frame structure, and a second set of parallel rails arranged perpendicular to the first set of rails to guide movement of the container handling vehicles in a second direction Y which is perpendicular to the first direction, the first and second sets of parallel rails dividing the rail system into a plurality of grid cells, wherein the automated storage and retrieval system comprises a plurality of container handling vehicles as defined above.

The wheel base unit with the first and second sets of wheels may be equal to a grid cell.

Two container handling vehicles, which have the same orientation, may occupy only three grid cell spaces along one row when passing each other along that row.

The first set of rails and or the second set of rails may comprise either a single track or a double track comprising two single tracks, and a grid cell may be defined as the horizontal area occupied by a grid opening delimited by the first and second set of rails in addition to the area occupied by single tracks in the first and second directions enclosing a single grid opening.

The wheel base unit may have a footprint equal to a horizontal extent in the first and second directions of a grid cell.

The container handling vehicle may comprise a support surface, wherein the support surface may provide a second container carrying position.

The second container carrying position may be arranged above the first container carrying position. Preferably, the second container carrying position has the same vertical projection as the first container carrying position. If arranged on a rail system, the size of the support section is preferably equal to or less than a grid cell. As an alternative to a second container carrying position, two or more storage containers may be stacked on top of each other where all of the stacked storage containers are supported by the first container carrying position.

The second container carrying position may be movable between:
- a retracted position where the second container carrying position is beyond a vertical projection of the first container carrying position, and
- an extended position where the second container carrying position is at or within the vertical projection of the first container carrying position.

The second container carrying position may be movable between the retracted position and the extended position via a pivot connection. The pivot connection may be such that:
- in the retracted position the second surface extends substantially vertically, and,
- in the extended position the second surface extends substantially horizontally.

The pivot connection could alternatively be arranged such that the second surface could be made to flip over onto the roof of the cantilever section. For example, it could be a hinge connection along the corner edge of the back of the cantilever at the top that connects to that section, the ends of the arms then resting against the vertical surfaces of the support section.

The second container carrying position may be linearly movable between the retracted position and the extended position via a linear movement arrangement. If using a linear movement arrangement, the linear movement arrangement can be arranged such that:
- in the retracted position the second container carrying position is moved to a position beyond the first container carrying position and above the cantilever section, and
- in the extended position the second container carrying position is above the first container carrying position.

The second container carrying position may be provided with a conveyor, i.e., it can self-offload the storage container at the second container carrying position independently of the storage container at the first container carrying position through use of the conveyor and some receiving infrastructure that can catch a high level container coming off the conveyor. If the first container carrying position is provided with a conveyor, any storage container at the first container carrying position may be offloaded without first having to offload the storage container positioned at the second container carrying position. If both the first and second container carrying position are provided with conveyors, any storage container positioned on the first and/ or second container carrying positions can be dispatched independently of the other storage container by using the conveyor.

It is further described a method of transferring a storage container between a first and second container handling vehicle as defined above, the first and second container handling vehicles operating on an automated storage and retrieval system comprising a two-dimensional rail system comprising a first set of parallel rails arranged to guide movement of container handling vehicles in a first direction X across the top of the frame structure, and a second set of parallel rails arranged perpendicular to the first set of rails to guide movement of the container handling vehicles in a second direction Y which is perpendicular to the first direction, the first and second sets of parallel rails dividing the rail system into a plurality of grid cells, wherein the method comprises the steps of:
- utilizing a main control system to instruct the first and second container handling vehicles to position themselves in neighboring grid cells such that the lifting device of the first container handling vehicle is directly above the upper surface of the lower section of the second container handling vehicle;
- transferring a storage container between the first container carrying position of the lower section of the second container handling vehicle and the lifting device of the first container handling vehicle. The transfer of storage container can be from the first container handling vehicle and to the second container handling vehicle, and vice versa.

The step of transferring a storage container between the upper surface of the lower section of the second container handling vehicle and the lifting device of the first container handling vehicle may comprise the steps of:
- setting the container handling vehicle carrying or supporting the storage container as a master vehicle;
- setting the other container handling vehicle as a slave vehicle;
- sending a get_bin command to the slave vehicle;
- the slave vehicle performs the get_bin command and updates its internal status when the storage container is confirmed positioned on vehicle;
- the slave vehicle sends a confirmation to the control system when the storage container is in the confirmed positioned on vehicle such that the storage container is sufficiently clear from the first container carrying position of the master vehicle, preferably with margin;
- the master vehicle detects that the storage container is gone and it will send a bin_update status to the control system;
- the control system updates the logic state to match with the physical state of the master vehicle and the slave vehicle.

The get_bin command may include a parameter defining a height of the storage container to be transferred such that the lifting device of the master vehicle is lowered to a position equal to an uppermost part of the storage container positioned on the first container carrying position. The height of the storage container is the distance between the lifting device in the docked upper position and to the top of the storage container. This distance may vary dependent on the height of the storage container and whether the storage container is positioned on the first container carrying position or a container carrying position at another elevation.

The step of setting the other container handling vehicle as a slave vehicle may include a step of sending a synchronize_to_master command to the slave vehicle such that the slave vehicle moves with and follows the master vehicle.

After the step of sending a synchronize_to_master command to the slave vehicle the method may further comprise a step of sending a message from the slave vehicle to the main control system when the slave vehicle moves with and follows the master vehicle.

It is further described a method of transferring a storage container between a container handling vehicle as defined above and an external container carrying position, the container handling vehicle operating on an automated storage and retrieval system comprising a two-dimensional rail system comprising a first set of parallel rails arranged to guide movement of container handling vehicles in a first direction X across the top of the frame structure, and a second set of parallel rails arranged perpendicular to the first set of rails to guide movement of the container handling vehicles in a second direction Y which is perpendicular to the first direction, the first and second sets of parallel rails dividing the rail system into a plurality of grid cells, wherein the method comprises the steps of:
- utilizing a conveyor on the first container carrying position of the lower section to transfer a storage container between the container handling vehicle and an external position outside the container handling vehicle.

The relative terms "upper", "lower", "below", "above", "higher" etc. shall be understood in their normal sense and as seen in a cartesian coordinate system.

In the following, numerous specific details are introduced by way of example only to provide a thorough understanding of embodiments of the claimed system and vehicle. One skilled in the relevant art, however, will recognize that these embodiments can be practiced without one or more of the specific details, or with other components, systems, etc. In other instances, well-known structures or operations are not shown, or are not described in detail, to avoid obscuring aspects of the disclosed embodiments.

### BRIEF DESCRIPTION OF THE DRAWINGS

Following drawings are appended to facilitate the understanding of the invention.
Fig. 1A is a perspective view of a framework structure of a prior art automated storage and retrieval system;
Figs. 1B-D are top views of a container handling vehicle rail system, where Fig. 1B shows a single track rail system, Fig. 1C shows a double track rail system and Fig. 1D shows a double rail system with the width and length of a container handling vehicle grid cell indicated;
Fig. 2 is a perspective view of a prior art container handling vehicle having a centrally arranged cavity for carrying storage containers therein;
Fig. 3A is a perspective view of a prior art container handling vehicle having a cantilever for carrying storage containers underneath;
Figs. 3B and 3C show an exemplary wheel base unit for the container handling vehicle;
Fig. 4A is a simplified side-view of a container handling vehicle according to an embodiment of the invention comprising a wheel base unit and a body unit, where the body unit comprises a lower section, a support section and a cantilever section;
Fig. 4B is a perspective view of a container handling vehicle according to an embodiment of the invention where protective covers have been removed to better illustrate the setup of the components in a lower section, support section and cantilever section of a body unit of the container handling vehicle;
Fig. 4C is a top view of Fig. 4B;
Figs. 4D-4I are exemplary side views of different setups providing opposite rotation of the lifting shafts;
Fig. 5 is an example of the cantilever section of the body unit, and indicates which parts that may form part of the cantilever section;
Fig. 6 is a simplified side-view of a container handling vehicle according to an embodiment of the invention supporting one storage container on a first container carrying position and one storage container by the lifting device, the container handling vehicle comprising a wheel base unit and a body unit, where the body unit comprises a lower section, a support section and a cantilever section;
Figs. 7A - 7D show step-by-step an example method of transferring a storage container between a first and a second container handling vehicle operating on an automated storage and retrieval system comprising a two-dimensional rail system;
Figs. 8A - 8D show examples of a container handling vehicle according to the invention with a conveyor on the first container carrying position, where Fig. 8A shows a situation when not carrying a storage container on the first container carrying position, Fig. 8B shows a situation with a storage container on the first container carrying position, and Fig. 8C shows a possible transfer of the storage container from the conveyor on the first container carrying position and to an external conveyor, and Fig. 8D show the conveyor oriented 90 degrees relative the conveyor on Fig. 8A;
Fig. 9 shows an example of a container handling vehicle according to the invention comprising an upper surface providing a first container carrying position and a support surface providing a second container carrying position;
Fig. 10A shows the second container carrying position 426 of Fig. 9 in a retracted position via a pivot connection such that in the retracted position the second container carrier position is directed upwards.
Fig 10B shows another example of a possible extended position of the second container carrier position;
Fig. 10C shows the example of Fig. 10B where the second container carrier position has been pivoted 180 degrees and rests upside down on the cantilever section when in the retraced position;
Figs. 11A and 11B show yet another example of the second container carrier position, where, in Fig. 11A the second container carrier position is in the extended position directly above the first container carrying position, and in Fig. 11B, the second container carrying position is moved to a retracted position by means of a linear movement arrangement;

In the drawings, like reference numerals have been used to indicate like parts, elements or features unless otherwise explicitly stated or implicitly understood from the context.

### DETAILED DESCRIPTION OF THE INVENTION

In the following, embodiments of the invention will be discussed in more detail by way of example only and with reference to the appended drawings. It should be understood, however, that the drawings are not intended to limit the invention to the subject-matter depicted in the drawings.

The framework structure 100 of the automated storage and retrieval system 1 is constructed in accordance with the prior art framework structure 100 described above in connection with Figs. 1A-1D, i.e. a number of upright members 102 and a number of horizontal members 103, which are supported by the upright members 102, and further that the framework structure 100 comprises a first, upper rail system 108 in the X direction and Y direction.

The framework structure 100 further comprises storage compartments in the form of storage columns 105 provided between the members 102, 103, where storage containers 106 are stackable in stacks 107 within the storage columns 105.

The framework structure 100 can be of any size. In particular it is understood that the framework structure can be considerably wider and/or longer and/or deeper than disclosed in Fig. 1A. For example, the framework structure 100 may have a horizontal extent of more than 700x700 columns and a storage depth of more than twelve containers.

The rail system 108 may be a single rail (also denoted single track) system, as is shown in Fig. 1B. Alternatively, the rail system 108 may be a double rail (also denoted double track) system, as is shown in Fig. 1C, thus allowing a container handling vehicle 201 having a footprint generally corresponding to the lateral area defined by an access opening/ grid column 112 to travel along a row of grid columns even if another container handling vehicle 201 is positioned above a grid column neighboring that row. Both the single and double track system, or a combination comprising a single and double track arrangement in a single rail system 108, forms a grid pattern in the horizontal plane *P* comprising a plurality of rectangular and uniform grid locations or grid cells 122, where each grid cell 122 comprises a grid opening 115 being delimited by a pair of tracks 110a,110b of the first set of rails 110 and a pair of tracks 111a,111b of the second set of rails 111. In Fig. 1C the grid cell 122 is indicated by a dashed box. For example, the sections of the rail-based system being made of aluminium are the rails, and on the upper surface of the rails, there are a pair of tracks that the wheels of the vehicle run in.

However, the sections could be separate rails each with a track.

Consequently, tracks 110a and 110b form pairs of rails defining parallel rows of grid cells running in the X direction, and tracks 111a and 111b form pairs of rails defining parallel rows of grid cells running in the Y direction.

As shown in Fig. 1D, each grid cell 122 has a width *W_{c}* which is typically within the interval of 30 to 150 cm, and a length *L_{c}* which is typically within the interval of 50 to 200 cm. Each grid opening 115 has a width *Wₒ* and a length *Lₒ* which is typically 2 to 10 cm less than the width *W_{c}* and the length *L_{c}* of the grid cell 122.

In the X and Y directions, neighboring grid cells are arranged in contact with each other such that there is no space therebetween.

Fig. 3A is a perspective view of a prior art container handling vehicle 301 having a cantilever for carrying storage containers underneath.

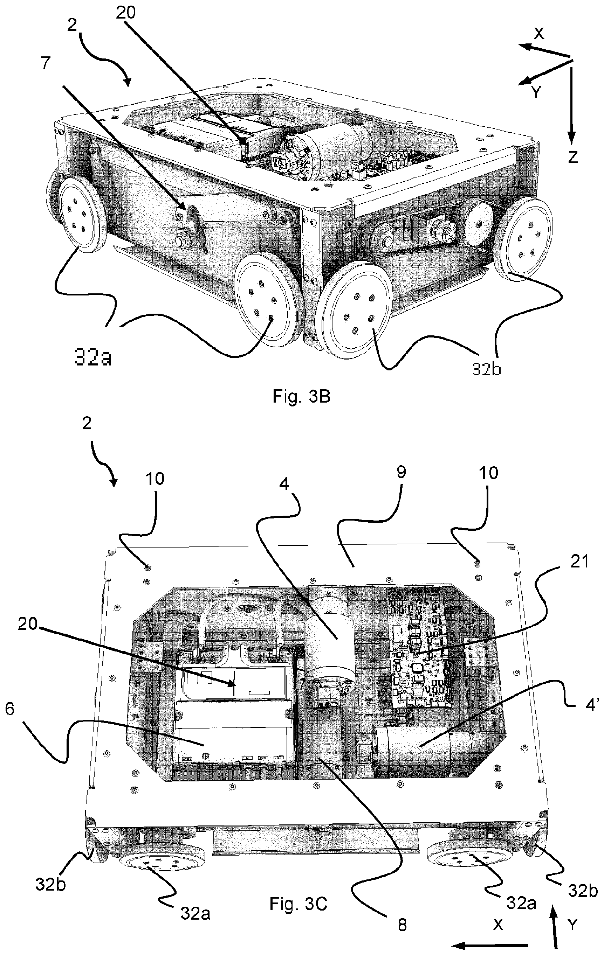

An exemplary wheel base unit for a container handling vehicle 401 according to the invention is shown in Figs. 3B and 3C. The wheel base unit 2 features a wheel arrangement 32a,32b having a first set of wheels 32a for movement in a first direction upon a rail system 108 and a second set of wheels 32b for movement in a second direction perpendicular to the first direction. Each set of wheels comprises two pairs of wheels arranged on opposite sides of the wheel base unit 2. To change the direction in which the wheel base unit may travel upon the rail system, one of the sets of wheels 32b is connected to a wheel displacement assembly 7. The wheel displacement assembly is able to lift and lower the connected set of wheels 32b relative to the other set of wheels 32a such that only the set of wheels travelling in a desired direction is in contact with the rail system. The wheel displacement assembly 7 is driven by an electric motor 8. Further, two electric motors 4,4', powered by a rechargeable battery 6, are connected to the set of wheels 32a,32b to move the wheel base unit in the desired direction.

Further referring to Figs. 3B and 3C, the horizontal periphery of the wheel base unit 2 is dimensioned to fit within the horizontal area defined by a grid cell, such that two wheel base units 2 may pass each other on any adjacent grid cells of the rail system 108. In other words, the wheel base unit 2 may have a footprint, i.e. an extent in the X and Y directions, which is generally equal to the horizontal area of a grid cell, i.e. the extent of a grid cell in the X and Y directions, e.g. as is described in WO2015/193278A1.

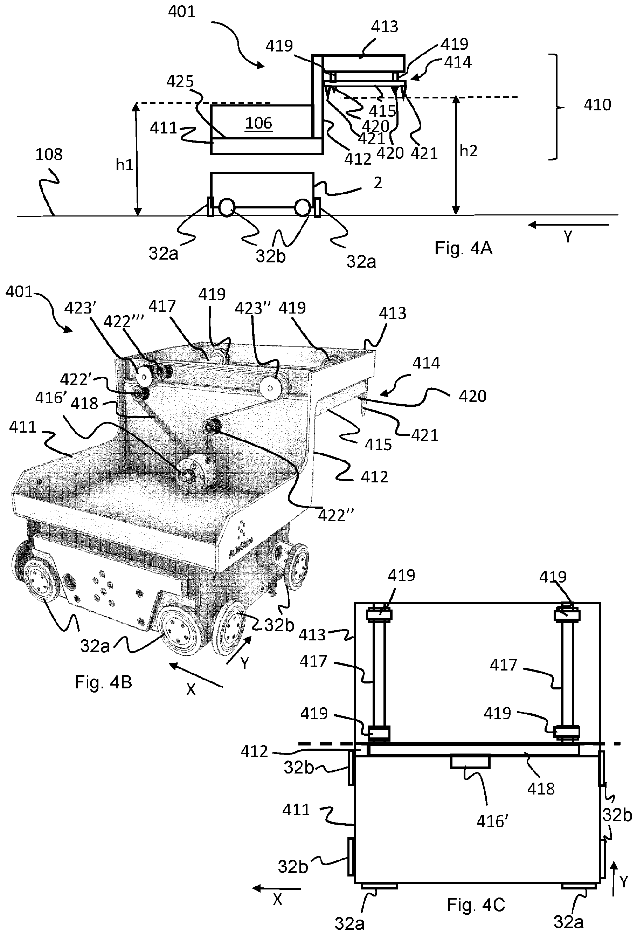

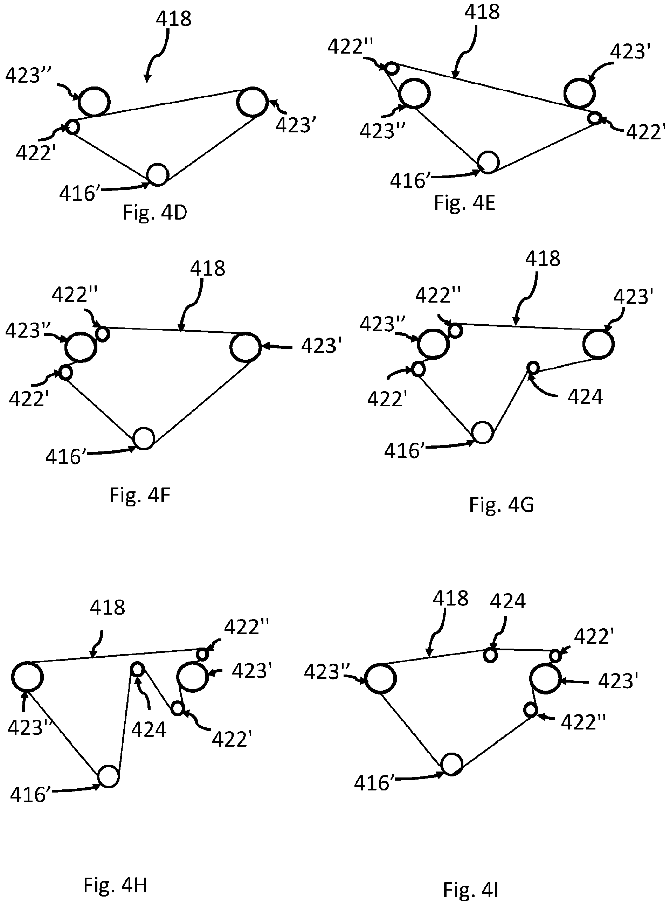

Fig. 4A is a simplified side-view of a container handling vehicle 401 according to an embodiment of the invention comprising a wheel base unit 2 and a body unit 410, where the body unit 410 comprises a lower section 411, a support section 412 and a cantilever section 413. The lower section 411 having an upper surface, wherein the upper surface 425 provides a first container carrying position 425 for carrying a storage container 106.

Referring to Figs. 3B and 4A, the wheel base unit 2 has a top panel/flange 9 (i.e. an upper surface) configured as a connecting interface for connection to a body unit 410 of a container handling vehicle 401. The top panel 9 have a centre opening 20 and features multiple through-holes 10 (i.e. connecting elements) suitable for a bolt connection via corresponding through-holes in a lower section 411 of the body unit 401. In other embodiments, the connecting elements of the top panel 9 may for instance be threaded pins for interaction with the through-holes of the lower section 411. In yet another embodiment, the container handling vehicle 401 is not in this modular design, but rather made in one or a few pieces. The presence of a centre opening 20 is advantageous as it provides access to internal components of the wheel base unit 2, such as the rechargeable battery 6 and an electronic control system 21.

Further referring to Fig. 4A, the body unit 410 is disclosed as comprising an S-shaped housing linking the lower section 411, the support section 412 and the cantilever section 413 together. The container handling vehicle 401 of Fig. 4A is operable on a rail system 108 as described in connection with Figs. 1A-1D, and comprises a wheel base unit 2 and a body unit 410. The wheel base unit 2 comprising sets of wheels 32a, 32b for guiding the container handling vehicle 401 along the rail system 108 in the first and second directions X, Y. The body unit 410 comprising a lower section 411, a support section 412 and a cantilever section 413. The lower section 411 is mounted on an upper surface of the wheel base unit 2. The lower section 411 may have a footprint with a horizontal extent which is equal to or less than the horizontal extent of one of the grid cells 122. The top of the storage container 106 is at a first height h1. I.e. the first height h1 is the distance from the top of the rail system 108 to the top of the storage container 106 positioned on the first container carrying position on the upper surface the lower section 411 when the lower section 411 is mounted on the wheel base unit 2. The support section 412 extends vertically from the lower section 411 and has a footprint with a horizontal extent which is smaller than the footprint of the lower section 411. The width of the support section 412 (i.e. the extension in the X direction) may be equal to the width of the lower section 411 (in the X direction). The extension of the support section 412 in the Y direction is smaller than the extension of the lower section 411 in the Y direction.

Furthermore, referring to Fig. 4C, when seen in a plan view from above, the footprint of the support section 412 falls within the footprint of the lower section 411. In other words, as disclosed in Figs 4A-4C, the support section 412 does not extend beyond the lower section 411. The cantilever section 413 extends horizontally from the support section 412 beyond the footprint of the lower section 411 and comprises a lifting device 414 suspended from the cantilever section 413.

The lifting device 414 comprising a lifting frame 415 having a lowermost part at a second height h2 when the lifting frame 415 is docked in an upper position adjacent the cantilever section 413 (Figs. 4A and 4B show docked position of lifting frame 415). I.e. the second height h2 is the distance from the top of the rail system 108 to the lowermost part of the lifting frame 415. The lifting frame 415 is suspended from the cantilever section 413 via lifting bands 419. The lifting frame 415 may comprise gripping devices 420 extending from a lower surface thereof for connecting the lifting frame to complementary lifting holes of the storage containers 106 thereby rendering possible lifting and lowering of the storage containers 106. In addition, the lifting frame 415 may comprise guides 421 arranged in the corners of the lower surface of the lifting frame 415 to align the gripping devices 420 of the lifting frame 415 relative the complementary lifting holes on the storage containers 106. In many situations the guides 421 or the gripping devices 420 may constitute the lowermost part of the lifting frame 415 such that the second height h2 is the lowermost part of any of these components. However, according to an embodiment of the invention, the second height h2 of the lowermost part of the lifting frame 415, when the lifting frame 415 is docked in its upper position, is always above the first height h1 of the storage container 106 positioned on the first container carrying position.

By ensuring that the lowermost part of a docked lifting frame 415 of a first container handling vehicle 401 can pass over a storage container 106 supported on the first container carrying position of a second container handling vehicle 401 when the first and second container vehicles 401 pass one another on adjacent grid cells 122, the first and second container handling vehicles 401 can pass each other while collectively occupying fewer grid cells than required in prior art solutions.

Fig. 4B is a perspective view of a container handling vehicle 401 according to the embodiment of the invention where protective covers have been removed to better illustrate the setup of the components in the lower section 411, the support section 412 and the cantilever section 413 constituting the body unit 410 of the container handling vehicle 401. In the embodiment of Fig. 4B, the lifting device 414 is disclosed as comprising a lifting device motor 416' and at least two lifting shafts 417',417". The two lifting shafts 417',417" are arranged in parallel in the cantilever section 413. The lifting bands 419 connected to the lifting frame 415, are spooled onto and off the lifting shafts 417',417", thereby moving the lifting frame 416 and any storage container 106 carried by the lifting frame 415 up and down. Lifting shaft wheels 423',423" are arranged on each end of the lifting shafts 417 and operate together with the lifting shafts 417, respectively. As shown in Fig. 4B, the lifting device motor 416' is arranged in the lower section 411. The lifting device motor 416' and the two lifting shafts 417 are connected to each other via the lifting shaft wheels 423', 423" and an endless flexible force transferring element 418, such as e.g. belt, running via sheaves 422 to ensure that the first and second lifting shafts 417 rotate simultaneously in the same direction. Any necessary power source (not shown) for supplying power to the lifting device motor 416' may be arranged in the lower section 413 in order to obtain a favorable center of gravity with reduced risk of tilting of the container handling vehicle in the event lifting a heavy storage container 106 and/ or as a result of too high acceleration/deceleration of the container handling vehicle 401.

The lifting frame 415 is shown with guides 421 arranged in the corners of the lower surface of the lifting frame 415 to align the gripping devices 420 of the lifting frame 41 relative the complementary lifting holes on the storage containers 106.

Any necessary power source (not shown) for supplying power to the lifting device motor 416" may be arranged in the lower section 413 in order to obtain a favorable center of gravity with reduced risk of tilting of the container handling vehicle in the event lifting a heavy storage container 106 and/ or as a result of too high acceleration/deceleration of the container handling vehicle 401.

Fig. 4C is a top view of Fig. 4B, showing the lower section 411, the support section 412 and the cantilever section 413.

Figs. 4D-4I are examples of different setups providing opposite rotation of the lifting shafts 417',417". As disclosed in all of the examples of Figs. 4D-4I, common to all of the force transferring setups, is the presence of a rotatable lifting device motor 416', a first and second lifting shaft wheel 423', 423" whereof each is connected for rotation with the respective lifting shafts 417',417", at least one sheave 422', 422", a force transferring element 418 in the form of an endless belt forming a closed loop and where at least one of sheaves 422',422" is arranged inside the closed loop. In addition, the first or second lifting shaft wheel 423', 423" is in contact with an inner surface of the endless belt 418 and the other of the first or second lifting shaft wheel 423', 423" is in contact with the outer surface of the endless belt 418. This is achieved by arranging one of the first or second lifting shaft wheels 423', 423" inside the closed loop formed by the force transferring element 418 and the other of the first or second lifting shaft wheel 423', 423" outside the closed loop formed by the force transferring element 418. The mutual setup of the first and second lifting shaft wheels 423', 423" (e.g., acting on opposite sides of the endless belt), the guide sheaves 422', 422" and the force transferring element 418, are such that the first and second lifting shafts 417', 417" (via first and second lifting shaft wheels 423', 423", respectively) rotate in opposite directions (counter rotates). The first and second lifting shaft wheels 423', 423" are preferably arranged in the same horizontal plane in order to ensure horizontal stability during lifting. The sheave(s) 422', 422" are arranged along the travel of the force transferring element 418 at fixed positions such that they provide for a "change" in the travel direction of the force transferring element 418. Each of the sheaves 422', 422" are arranged to lead the force transferring element 418 correctly onto the first and second lifting shaft wheel 423', 423" thereby allowing the first and second lifting shaft wheels 423', 423" (and thus the lifting shafts 417', 417") to rotate in opposite directions.

In the example in Fig. 4D, one sheave 422' is shown.

In the examples of Figs. 4E-4I, a number of examples of force transferring setups comprising two sheaves 422', 422", are shown. The sheaves 422', 422" are arranged alternating along the path of the force transferring element 418 such that the first lifting shaft wheel 423' is followed by a sheave 422', 422" and the second lifting shaft wheel 423" is followed by a sheave 422', 422" in both directions of travel of the force transferring element 418.

In the examples of Figs. 4G, 4H, 4I, there are disclosed examples comprising a tightening wheel 424 for tensioning of the force transferring element 418. The tightening wheel 424 may for example be an eccentric tensioning mechanism comprising a rotatable sheave with an axle that can be adjusted within an opening in a fixed bracket. The location of the tightening wheel 424 along the path of the force transferring element 418 is preferably at a location where the path length of the force transferring element 418 can be affected (i.e. the path of the force transferring element can be shortened or prolonged in order to further tension or reduce tension in the force transferring element). The tightening wheel 424 can be arranged inside (Figs. 4G and 4I) or outside (Fig. 4H) the closed loop formed by the force transferring element 418.

In the examples in Figs. 4D-4F, a dedicated tensioning mechanism such as a tightening wheel is not shown; however, if a tensioning mechanism is required, one of the sheaves 422' or 422" may be a tensioning mechanism and can be replaced by a tightening wheel 424.

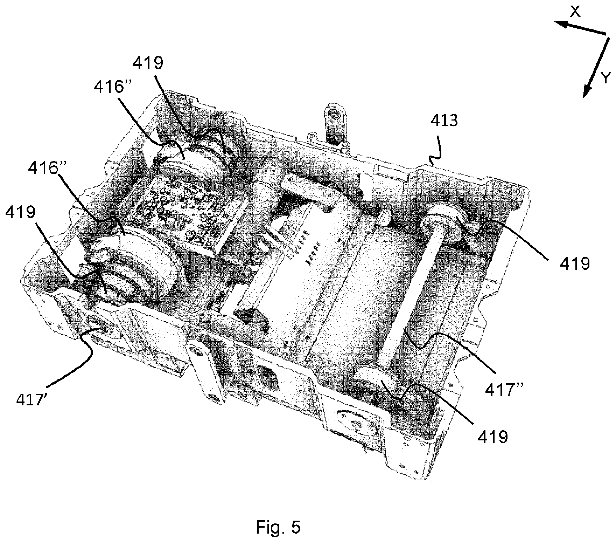

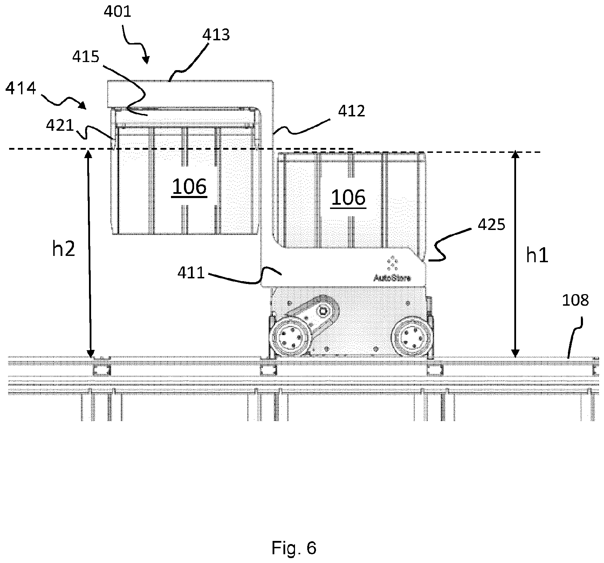

Fig. 5 is an example of another setup of the lifting device 414, where, in addition to the lifting shafts 417 and the lifting bands spoolable onto and off the lifting shafts 417', 417", also the lifting device motor 416" is arranged in the cantilever section 413 of the body unit 410. The lifting device motor(s) 416" in Fig 5 is a brushless DC motor encircling one of the lifting shafts 417', 417". Synchronous operation of the lifting shafts 417', 417" can be obtained by a synchronization element such as a force transferring element as disclosed in Figs. 5A-5E and 6A-6H in WO 2019/137870 A1 (Applicant: Autostore Technology AS).

Fig. 6 is a simplified side-view of a container handling vehicle 401 according to an embodiment of the invention supporting one storage container 106 on a first container carrying position 425 and one storage container 106 by the lifting device 415, the container handling vehicle 401 comprising a wheel base unit 2 and a body unit, where the body unit comprises a lower section 411, a support section 412 and a cantilever section 413. The components of the container handling vehicle in Fig. 6 are similar to the container handling vehicle in Fig. 4A. The first container carrying position 425 is preferably recessed to provide sideways support for a storage container 425 positioned on the first container carrying position 425.

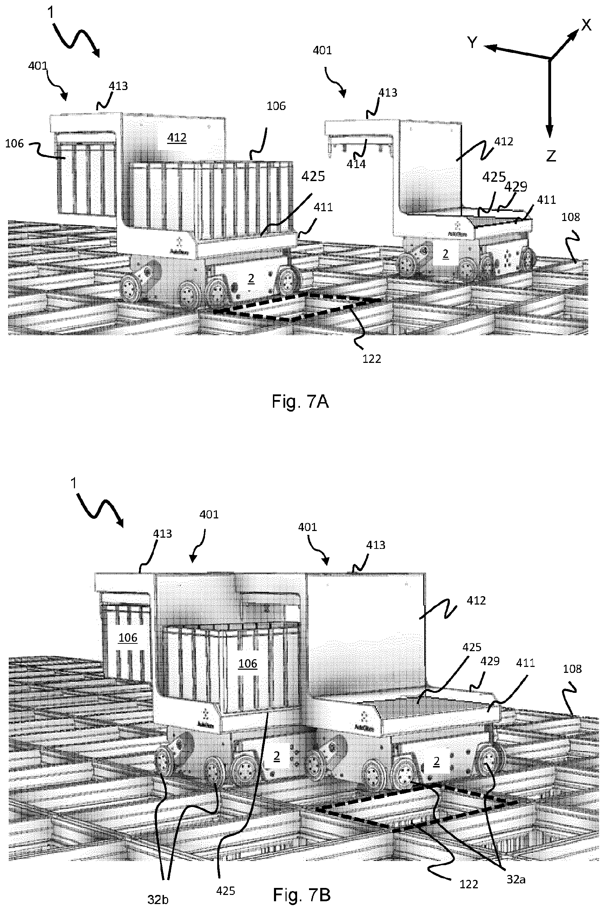

Figs. 7A - 7D show step-by-step an examplary method of transferring a storage container 106 between a first and a second container handling vehicle 401 operating on an automated storage and retrieval system 1 comprising a two-dimensional rail system 108. Referring to Fig. 7A, a first container handling vehicle 401 (i.e. the vehicle to the right in the figure not carrying a storage container 106) is positioned in a distance from the second container handling vehicle 401 (i.e. the vehicle to the left in the figure carrying a storage container 106 in the lifting device and carrying a storage container 106 on the first container carrying position 425). The first container handling vehicle 401 and the second container handling vehicle 4011 operate in neighboring rows on the rail system 108.

In Fig. 7B the first and second container handling vehicles 401 have moved closer to each other compared to the situation in Fig. 7A and the lifting device 414 of the first container handling vehicle 401 is almost above the upper surface/first container carrying position 425 of the lower section 411 of the second container handling vehicle 401.

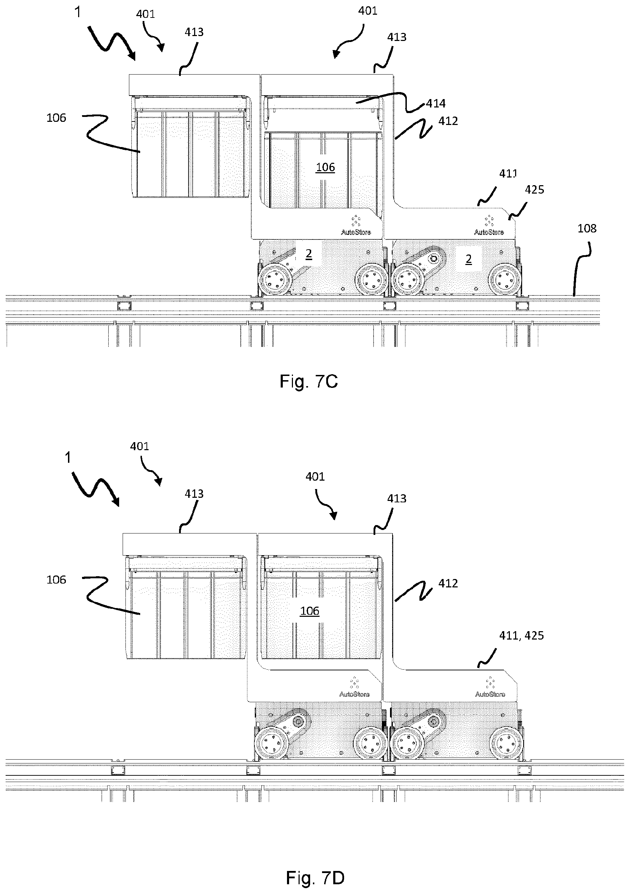

In Fig. 7C the first and second container handling vehicles 401 have positioned themselves in neighboring grid cells 122 such that the lifting device 414 of the first container handling vehicle 401 is directly above the upper surface/first container carrying position 425 of the lower section 411 of the second container handling vehicle 401.

In Fig. 7D the lifting device 414 of the first container handling vehicle 401 has been lowered down to lift the storage container 106 positioned on the first container carrying position 425 on the second container handling vehicle 401 and lifted the storage container 106 off the first container carrying position 425. The transfer of the storage container 106 is now complete.

Referring to Figs. 7A - 7D, the method of transferring the storage container may comprise the steps of:
- utilizing a main control system to instruct the first and second container handling vehicles 401 to position themselves in neighboring grid cells 122 such that the lifting device 414 of the first container handling vehicle 401 is directly above the upper surface of the lower section 411 of the second container handling vehicle 401;
- transferring a storage container 106 between the first container carrying position 425 of the lower section 411 of the second container handling vehicle 401 and the lifting device 414 of the first container handling vehicle 401.The step of transferring a storage container 106 between the upper surface of the lower section 411 of the second container handling vehicle 401 and the lifting device 414 of the first container handling vehicle 401 may comprise the steps of:
- setting the container handling vehicle 401 carrying or supporting the storage container 106 as a master vehicle;
- setting the other container handling vehicle 401 as a slave vehicle;
- sending a get_bin command to the slave vehicle;
- the slave vehicle performs the get_bin command and updates its internal status when the storage container 106 is confirmed positioned on vehicle 401;
- the slave vehicle sends a confirmation to the control system when the storage container is in the confirmed positioned on vehicle such that the storage container 106 is sufficiently clear from the first container carrying position 425 of the master vehicle;
- the master vehicle detects that the storage container 106 is gone and it will send a bin_update status to the control system 500;
- the control system 500 updates the logic state to match with the physical state of the master vehicle and the slave vehicle.

The get_bin command may include a parameter defining a height of the storage container 106 to be transferred such that the lifting device 414 of the master vehicle is lowered to a position equal to an uppermost part of the storage container positioned on the first container carrying position.

The step of setting the other container handling vehicle 401 as a slave vehicle may comprise the step of sending a synchronize_to_master command to the slave vehicle, such that the slave vehicle moves with and follows the master vehicle. This allows for transferring the storage container 106 between the upper surface of the lower section 411 of the second container handling vehicle 401 and the lifting device 414 of the first container handling vehicle 401 in motion. The slave vehicle may optionally send a message to the main control system when synchronization has been obtained. Alternatively, the main control system may determine that synchronization has been obtained based on positional information of the slave vehicle and the master vehicle. Synchronization has been obtained when the slave vehicle moves with and follows the master vehicle.

The master vehicle may send movement data, such as speed, acceleration, and position data to the slave vehicle. The slave vehicle may use the movement data to synchronize its own movements to the received movement data. The master vehicle may send the movement data via the main control system. The master vehicle may alternatively, or additionally send the movement data directly to the slave vehicle using local communication between the master vehicle and the slave vehicle. The local communication may be any suitable means of local wireless communication, such as near field communication (NFC) or infrared (IR).

Synchronized movement of the slave vehicle and the master vehicle may include a train-like synchronization where the slave vehicle follows behind the master vehicle, or the synchronized movement may include a parallel synchronization where the slave vehicle moves with the master vehicle side by side.

The automated storage and retrieval system may comprise a positioning system using multilateration techniques, such as a Time of Flight (TOF) measurement system, for determining the position of both the master vehicle and the slave vehicle. The main control system continuously receives position data from the positioning system of a position of the first container handling vehicle and position data of a position of the second container handling vehicle. The main control system may use the position data to instruct slave vehicle to move with and follow the master vehicle within a predetermined separation from the master vehicle. The movement of the master vehicle and the slave vehicle is thereby synchronized such that the step of transferring the storage container 106 between the upper surface of the lower section 411 of the second container handling vehicle 401 and the lifting device 414 of the first container handling vehicle 401 may be performed in motion.

The container handling vehicles may be arranged with sensors that can detect the position of the container handling vehicles on the rail system, and/or proximity sensors that detects the distance to nearby container handling vehicles. The main control system may instruct the slave vehicle to move with and follow the master vehicle within a predetermined separation from the master vehicle based on received distance data from the proximity sensor of the slave vehicle. The movement of the master vehicle and the slave vehicle is thereby synchronized such that the step of transferring the storage container 106 between the upper surface of the lower section 411 of the second container handling vehicle 401 and the lifting device 414 of the first container handling vehicle 401 may be performed in motion.

The container handling vehicles may be adapted to move together in physical contact with one another. The main control system may instruct the slave vehicle to move with and follow the master vehicle by first moving into physical contact of the master vehicle, and after contact continue to apply a push force on the master vehicle to maintain physical contact. The movement of the master vehicle and the slave vehicle is thereby synchronized such that the step of transferring the storage container 106 between the upper surface of the lower section 411 of the second container handling vehicle 401 and the lifting device 414 of the first container handling vehicle 401 may be performed in motion.

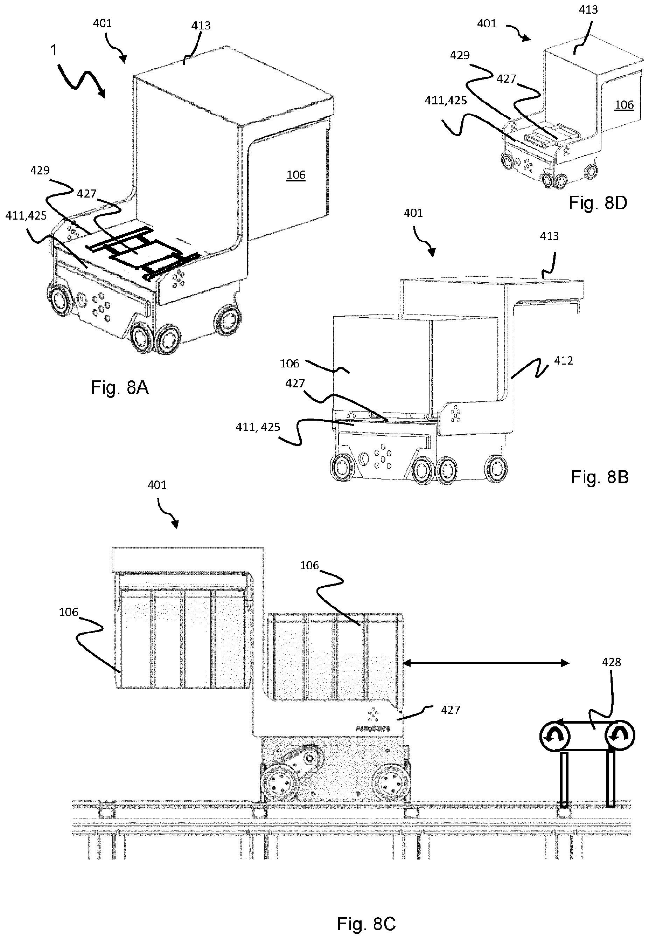

Figs. 8A - 8D show examples of a container handling vehicle 401 according to an embodiment of the invention with a conveyor 427 on the first container carrying position 425 adapted to transfer the storage container 106 backwards onto another container handling vehicle or to an external conveyor. through any of the short sides of the container handling vehicle 401.The conveyor 427 could also have been oriented 90 degrees relative the embodiment of Fig. 8A such that storage containers 106 could be transferred directly backwards onto another container handling vehicle or to an external conveyor (see Fig. 8D). Fig. 8A shows a situation when not carrying a storage container on the first container carrying position 425, while Fig. 8B shows a situation with a storage container 106 on the first container carrying position 425, and Fig. 8C shows a possible transfer of the storage container 106 from the conveyor 427 on the first container carrying position 425 and to an external conveyor 428. An upper surface of the external conveyor 428 is preferably arranged at the substantially same height as an upper surface of the conveyor 427 on first container carrier position 425.

Referring to Figs 7A, 7B and 8A the lower section 411 has an upper surface 425 which is recessed with respect to a pair of support webs 429, wherein the upper surface 425 provides the first container carrying position 425 for carrying a storage container 106. The support section 412 extends vertically from the pair of support webs 429 of the lower section 411, the support section 412 having a footprint with a horizontal extent which is smaller than the footprint of the lower section 411.

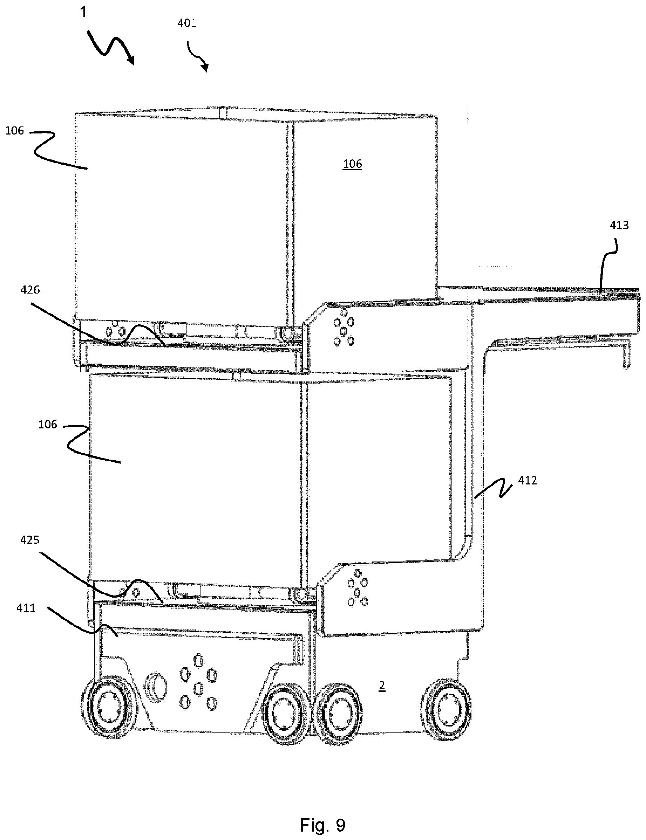

Fig. 9 shows an example of a container handling vehicle 401 according to an embodiment of the invention comprising an upper surface 425 providing a first container carrying position 425 and a support surface 426 providing a second container carrying position 426. The container handling vehicle 401 of Fig. 9 comprises similar components as the container handling vehicle of Figs. 4A and 6, which will not be repeated herein. However, the container handling vehicle 401 in Fig. 9 additionally comprises the second container carrying position 426. The second container carrying position 426 is disclosed as being arranged above the first container carrying position 425. Preferably, the first and second container carrying positions 425, 426 form the same vertical projection on the underlying rail system 108.

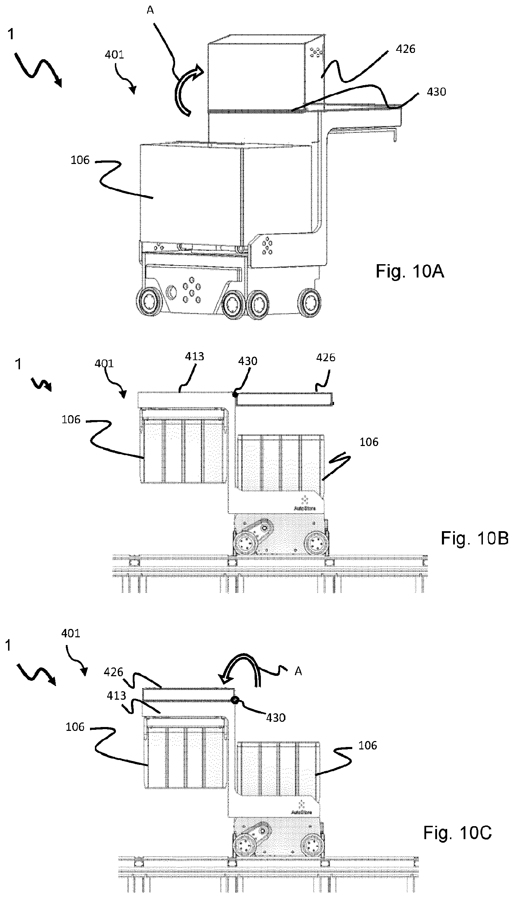

Fig. 10A shows the second container carrying position of Fig. 9 in a retracted position via a pivot connection 430 such that in the retracted position the second container carrier position 426 is directed upwards. The arrow A shows the direction of movement from a horizontal extended position (in Fig. 9) and a vertical retracted position in Fig 10A. The pivot connection 430 shows the axle of rotation of the second container carrier 426.

Fig 10B shows another example of a possible extended position of the second container carrier position 426. In Fig. 10B the second container carrier position 426 is in the extended horizontal position where it can receive a storage container (not shown).

Fig. 10C shows the example of Fig. 10B where the second container carrier position 426 has been pivoted 180 degrees and rests upside down on the cantilever section 413 of the container handing vehicle 401 when in the retraced position. The second container carrying position 426 has been pivoted from the retracted position to the extended position around the pivot connection arrangement 430 as shown with the arrow A.

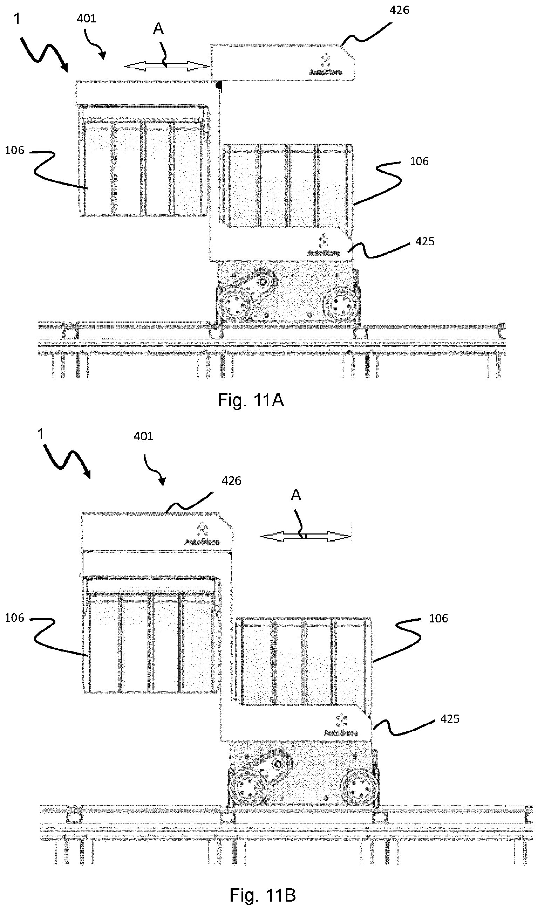

Figs. 11A and 11B show yet another example of the second container carrier position 426, where, in Fig. 11A the second container carrier position 426 is in the extended position directly above the first container carrying position 425, and in Fig. 11B, the second container carrying position is moved linearly (as indicated with arrow A) to a retracted position by means of a linear movement arrangement (not shown).

Thus, referring to Figs 10A, 10B, 10C and 11A and 11B, in order to obtain access to a storage container 106 positioned on the first container carrying position 425, the second container carrying position 426 is preferably movable between:
- a retracted position where the second container carrying position 426 is beyond a vertical projection of the first container carrying position 425, providing access to the upper surface of the first container carrying position 425 and or the storage container 106 positioned on thefirst container carrying position 425, and
- an extended position where the second container carrying position 426 is at or within the vertical projection of the first container carrying position 425. The second container carrying position 426 can be movable between the retracted position and the extended position via a pivot connection arrangement 430 (Figs. 10A-10C)) or a linear movement arrangement (Figs. 11A and 11B) where it is linearly movable between the retracted position and the extended position via a linear movement arrangement.

If using a pivot connection (see Figs 10A-10C), the pivot connection 430 can be arranged such that:
- in the retracted position the second container carrying position 426 is substantially vertical, and
- in the extended position the second container carrier position 426 extends substantially horizontally.

If using a linear movement arrangement (see Figs. 11A and 11B), the linear movement arrangement can be arranged such that:
- in the retracted position the second container carrying position 426 is moved to a position beyond the first container carrying position 425 and above the cantilever section 413, and
- in the extended position the second container carrying position 426 is above the first container carrying position 425.

In the preceding description, various aspects of an automated storage and retrieval system according to the invention have been described with reference to the illustrative embodiment. However, this description is not intended to be construed in a limiting sense. Various modifications and variations of the illustrative embodiment, as well as other embodiments of the system, which are apparent to persons skilled in the art, are deemed to lie within the scope of the present invention as defined by the following claims.

### List of reference numbers

| | |
|---|---|
| 1 | Automated storage and retrieval system |
| 2 | Wheel base unit |
| 4, 4' | Electric motor |
| 6 | Rechargeable battery |
| 7 | Wheel displacement assembly |
| 8 | Electric motor for wheel displacement assembly |
| 9 | Top panel/flange |
| 10 | Through-holes |
| 20 | Centre opening |
| 21 | Electronic control system |
| 30 | Remotely operated delivery vehicle |
| 32a,32b | Wheel arrangement, first and second set of wheels |
| 100 | Framework structure |
| 102 | Upright members of framework structure |
| 103 | Horizontal members of framework structure |
| 104 | Storage grid |
| 105 | Storage column |
| 106 | Storage container |
| 106' | Particular position of storage container |
| 107 | Stack |
| 108 | Rail system |
| 110 | First set of parallel rails in first direction (X) |
| 110a,110b | Tracks of first set of rails |
| 111 | Second set of parallel rail in second direction (Y) |
| 111a,111b | Tracks of second set of rails |
| 112 | Access opening / grid column |
| 115 | Grid opening |
| 119 | First port column |
| 120 | Second port column |
| 122 | Grid cell |
| 201 | Prior art storage container vehicle |
| 201a | Vehicle body of the storage container vehicle 201 |
| 201b | Drive means / wheel arrangement, first direction (X) |
| 201c | Drive means / wheel arrangement, second direction (Y) |
| 301 | Prior art cantilever storage container vehicle |
| 301a | Vehicle body of the storage container vehicle 301 |
| 301b | Drive means in first direction (X) |
| 301c | Drive means in second direction (Y) |
| 304 | Parts of the gripping device of the container handling vehicle 301 |
| 401 | Container handling vehicle |
| 410 | Body unit |
| 411 | Lower section of body unit |
| 412 | Support section of body unit |
| 413 | Cantilever section of body unit |
| 414 | Lifting device |
| 415 | Lifting frame |
| 416',416" | Lifting device motor |
| 417',417" | Lifting shaft |
| 418 | Force transferring element |
| 419 | Lifting band |
| 420 | Gripping device |
| 421 | Guide |
| 422',422" | sheaves |
| 423', 423" | Lifting shaft wheels |
| 424 | Tightening wheel |
| 425 | Upper surface / first container carrying position |
| 426 | Support surface/ second container carrying position |
| 427 | Conveyor |
| 428 | External conveyor |
| 429 | Support webs |
| 430 | Pivot connection arrangement |
| 500 | Control system |
| A | Arrow showing movement direction(s) |
| X | First direction |
| Y | Second direction |
| Z | Third direction |
| C | clearance |
| *h1* | First height |
| *h2* | Second height |

## Claims

1. A container handling vehicle (401) for operation on a two-dimensional rail system (108) comprising a first set of parallel rails (110) arranged to guide movement of container handling vehicles (401) in a first direction (X) across the top of a frame structure (100), and a second set of parallel rails (111) arranged perpendicular to the first set of rails (110) to guide movement of the container handling vehicles (401) in a second direction (Y) which is perpendicular to the first direction, the first and second sets of parallel rails (110,111) dividing the rail system (108) into a plurality of grid cells (122), wherein the container handling vehicle (401) comprises:
- a wheel base unit (2) comprising first and second sets of wheels (32a, 32b) for guiding the container handling vehicle (401) along the rail system (108) in the first and second directions (X, Y) respectively, wherein the first and second sets of wheels (32a, 32b) form outer peripheries of the wheel base unit (2);
- a body unit (410) comprising:
a lower section (411) which is provided on the wheel base unit (2), the lower section (411) having a footprint with a horizontal extent which is equal to or less than the wheel base unit (2), the lower section (411) having an upper surface, the upper surface (425) providing a first container carrying position (425) for carrying a storage container (106);
a support section (412) extending vertically from the lower section (411), the support section (412) having a footprint with a horizontal extent which is smaller than the footprint of the lower section (411); and
a cantilever section (413) extending horizontally from the support section (412) beyond the footprint of the lower section (411); and
- a lifting device (414) comprising a lifting frame (415) that is suspended from the cantilever section (413).

2. The container handling vehicle (401) according to claim 1, wherein, when a storage container (106) is positioned on the upper surface, an uppermost part of the storage container (106) represents a first height (h1); and
the lifting device (414) comprises a lifting frame (415) that is suspended from the cantilever section (413), the lifting frame (415) having a lowermost part at a second height (h2) when the lifting frame (415) is docked in an upper position adjacent the cantilever section (413);
wherein the second height (h2), when the lifting frame (415) is docked in its upper position, is above the first height (h1), such that the lowermost part of a docked lifting frame (415) of a first container handling vehicle (401) can pass over the uppermost part of a storage container (106) positioned on the upper surface of a lower section (411) of the body unit (410) of a second container handling vehicle (401) when the first and second container vehicles (401) pass one another on adjacent grid cells (122).

3. The container handling vehicle (401) according to any of the preceding claims, wherein the first container carrying position (425) is recessed to provide sideways support for a storage container (106) positioned on the first container carrying position (425).

4. The container handling vehicle (401) according to any of the preceding claims, wherein the lifting device (414) comprises a lifting device motor (416') and at least two lifting shafts (417), and wherein the at least two lifting shafts (417) are arranged in the cantilever section (413) and the lifting device motor (416') is arranged in the lower section (411), and wherein the lifting device motor (416') and at least two lifting shafts (417) are connected to each other via a drive coupling (418).

5. The container handling vehicle (401) according to any of the preceding claims, wherein the lifting device (414) comprises a lifting device motor (416") and at least two lifting shafts (417) arranged in the cantilever section (413).

6. The container handling vehicle (401) according to any of the preceding claims, wherein the body unit (410) comprises an S-shaped housing linking the lower section (411), the support section (412) and the cantilever section (413) together.

7. The container handling vehicle (401) according to any of the preceding claims, wherein the first container carrying position (425) comprises a conveyor (427) for transferring a storage container (106) between the first container carrying position (425) and an external support.

8. The container handling vehicle (401) according to any of the preceding claims, wherein a footprint of the lower section (413) of the body unit (410) is displaced with respect to the footprint of the wheel base unit (2) by substantially or equally a width of a wheel (32a, 32b).

9. The container handling vehicle (401) according to any of the preceding claims, wherein the lifting frame (415) is suspended on lifting bands (419), and wherein the lifting frame (415) extends horizontally and comprises gripping devices (420) and corner guides (420), wherein a lowermost point of the corner guides (420) provides the lowermost part of the lifting frame (415).

10. The container handling vehicle (401) according to any of the preceding claims, wherein the container handling vehicle (401) comprises a support surface (426), wherein the support surface (426) provides a second container carrying position (426).

11. The container handling vehicle (401) according to claim 10, wherein the second container carrying position (426) is arranged above the first container carrying position (425).

12. An automated storage and retrieval system (1) comprising a two-dimensional rail system (108) comprising a first set of parallel rails (110) arranged to guide movement of container handling vehicles (401) in a first direction (X) across the top of the frame structure (100), and a second set of parallel rails (111) arranged perpendicular to the first set of rails (110) to guide movement of the container handling vehicles (401) in a second direction (Y) which is perpendicular to the first direction, the first and second sets of parallel rails (110,111) dividing the rail system (108) into a plurality of grid cells (122), wherein the automated storage and retrieval system comprises a plurality of container handling vehicles (401) according to any of the preceding claims.

13. Method of transferring a storage container (106) between a first and second container handling vehicle (401) according to any of claims 1-11 operating on an automated storage and retrieval system comprising a two-dimensional rail system (108) comprising a first set of parallel rails (110) arranged to guide movement of container handling vehicles (401) in a first direction (X) across the top of the frame structure (100), and a second set of parallel rails (111) arranged perpendicular to the first set of rails (110) to guide movement of the container handling vehicles (401) in a second direction (Y) which is perpendicular to the first direction, the first and second sets of parallel rails (110,111) dividing the rail system (108) into a plurality of grid cells (122), wherein the method comprises the steps of:
- utilizing a main control system to instruct the first and second container handling vehicles (401) to position themselves in neighboring grid cells (122) such that the lifting device (414) of the first container handling vehicle (401) is directly above the upper surface of the lower section (411) of the second container handling vehicle (401);
- transferring a storage container (106) between the first container carrying position of the lower section (411) of the second container handling vehicle (401) and the lifting device (414) of the first container handling vehicle (401).

14. Method according to claim 13, wherein the step of transferring a storage container (106) between the upper surface of the lower section (411) of the second container handling vehicle (401) and the lifting device (414) of the first container handling vehicle (401) comprises the steps of:
- setting the container handling vehicle (401) carrying or supporting the storage container (106) as a master vehicle;
- setting the other container handling vehicle as a slave vehicle;
- sending a get_bin command to the slave vehicle;
- the slave vehicle performs the get_bin command and updates its internal status when the storage container is confirmed positioned on vehicle;
- the slave vehicle sends a confirmation to the control system when the storage container is in the confirmed positioned on vehicle such that the storage container is sufficiently clear from the first container carrying position of the master vehicle;
- the master vehicle detects that the storage container is gone and it will send a bin_update status to the control system;
- the control system updates the logic state to match with the physical state of the master vehicle and the slave vehicle.

15. Method of transferring a storage container between a container handling vehicle (401) according to any of the preceding claims 1-11 and an external container carrying position, the container handling vehicle operating on an automated storage and retrieval system comprising a two-dimensional rail system (108) comprising a first set of parallel rails (110) arranged to guide movement of container handling vehicles (401) in a first direction (X) across the top of the frame structure (100), and a second set of parallel rails (111) arranged perpendicular to the first set of rails (110) to guide movement of the container handling vehicles (401) in a second direction (Y) which is perpendicular to the first direction, the first and second sets of parallel rails (110,111) dividing the rail system (108) into a plurality of grid cells (122), wherein the method comprises the steps of:
- utilizing a conveyor on the first container carrying position of the lower section (411) to transfer a storage container (106) between the container handling vehicle (401) and an external position outside the container handling vehicle (401).

## Patentansprüche

1. Containerumschlagfahrzeug (401) zum Betrieb auf einem zweidimensionalen Schienensystem (108), das einen ersten Satz von parallelen Schienen (110), der derart angeordnet ist, dass er eine Bewegung von Containerumschlagfahrzeugen (401) in einer ersten Richtung (X) über die Oberseite einer Rahmenstruktur (100) führt, und einen zweiten Satz von parallelen Schienen (111), die senkrecht zu dem ersten Satz von Schienen (110) angeordnet sind, um eine Bewegung von Containerumschlagfahrzeugen (401) in einer zweiten Richtung (Y) zu führen, die senkrecht zu der ersten Richtung ist, umfasst, wobei die ersten und zweiten Sätze von parallelen Schienen (110, 111) das Schienensystem (108) in eine Mehrzahl von Gitterzellen (122) unterteilen, wobei das Containerumschlagfahrzeug (401) Folgendes umfasst:
- eine Radbasiseinheit (2), die erste und zweite Sätze von Rädern (32a, 32b) zum Führen des Containerumschlagfahrzeugs (401) entlang des Schienensystems (108) in der ersten bzw. zweiten Richtung (X, Y) umfasst, wobei die ersten und zweiten Sätze von Rädern (32a, 32b) Außenumfänge der Radbasiseinheit (2) bilden;
- eine Karosserieeinheit (410), umfassend:
einen unteren Abschnitt (411), der auf der Radbasiseinheit (2) bereitgestellt ist, wobei der untere Abschnitt (411) eine Grundfläche mit einer horizontalen Erstreckung umfasst, die gleich zu der oder kleiner als die Radbasiseinheit (2) ist, wobei der untere Abschnitt (411) eine obere Fläche aufweist, wobei die obere Fläche (425) eine erste Containertrageposition (425) zum Tragen eines Lagercontainers (106) bereitstellt;
einen Stützabschnitt (412), der sich vertikal von dem unteren Abschnitt (411) erstreckt, wobei der Stützabschnitt (412) eine Grundfläche mit einer horizontalen Erstreckung aufweist, die kleiner als die Grundfläche des unteren Abschnitts (411) ist; und
einen auskragenden Abschnitt (413), der sich horizontal von dem Stützabschnitt (412) über die Grundfläche des unteren Abschnitts (411) hinaus erstreckt; und
- eine Hubvorrichtung (414), die einen Hubrahmen (415) umfasst, der an dem auskragenden Abschnitt (413) aufgehängt ist.

2. Containerumschlagfahrzeug (401) nach Anspruch 1, wobei, wenn ein Lagercontainer (106) auf der oberen Fläche positioniert ist, ein oberster Teil des Lagercontainers (106) eine erste Höhe (h1) darstellt; und wobei die Hubvorrichtung (414) einen Hubrahmen (415) umfasst, der an dem auskragenden Abschnitt (413) aufgehängt ist, wobei der Hubrahmen (415) einen untersten Teil aufweist, der sich auf einer zweiten Höhe (h2) befindet, wenn der Hubrahmen (415) in einer oberen Position angrenzend an den auskragenden Abschnitt (413) angedockt ist;
wobei die zweite Höhe (h2), wenn der Hubrahmen (415) in seiner oberen Position angedockt ist, über der ersten Höhe (h1) liegt, so dass der unterste Teil eines angedockten Hubrahmens (415) eines ersten Containerumschlagfahrzeugs (401) über den obersten Teil eines Lagercontainers (106) passieren kann, der auf der oberen Fläche eines unteren Abschnitts (411) der Karosserieeinheit (410) eines zweiten Containerumschlagfahrzeugs (401) positioniert ist, wenn die ersten und zweiten Containerfahrzeuge (401) einander auf angrenzenden Gitterzellen (122) passieren.

3. Containerumschlagfahrzeug (401) nach einem der vorhergehenden Ansprüche, wobei die erste Containertrageposition (425) zurückgesetzt ist, um eine seitliche Stütze für einen Lagercontainer (106) bereitzustellen, der auf der ersten Containertrageposition (425) positioniert ist.

4. Containerumschlagfahrzeug (401) nach einem der vorhergehenden Ansprüche, wobei die Hubvorrichtung (414) einen Hubvorrichtungsmotor (416') und mindestens zwei Hubwellen (417) umfasst, und wobei die mindestens zwei Hubwellen (417) in dem auskragenden Abschnitt (413) angeordnet sind und der Hubvorrichtungsmotor (416') in dem unteren Abschnitt (411) angeordnet ist, und wobei der Hubvorrichtungsmotor (416') und mindestens zwei Hubwellen (417) über eine Antriebskupplung (418) miteinander verbunden sind.

5. Containerumschlagfahrzeug (401) nach einem der vorhergehenden Ansprüche, wobei die Hubvorrichtung (414) einen Hubvorrichtungsmotor (416'') und mindestens zwei Hubwellen (417) umfasst, die in dem auskragenden Abschnitt (413) angeordnet sind.

6. Containerumschlagfahrzeug (401) nach einem der vorhergehenden Ansprüche, wobei die Karosserieeinheit (410) ein S-förmiges Gehäuse umfasst, die den unteren Abschnitt (411), den Stützabschnitt (412) und den auskragenden Abschnitt (413) miteinander verbindet.

7. Containerumschlagfahrzeug (401) nach einem der vorhergehenden Ansprüche, wobei die erste Containertrageposition (425) einen Förderer (427) zum Übertragen eines Lagercontainers (106) zwischen der ersten Containertrageposition (425) und einer externen Stütze umfasst.

8. Containerumschlagfahrzeug (401) nach einem der vorhergehenden Ansprüche, wobei eine Grundfläche des unteren Abschnitts (413) der Karosserieeinheit (410) in Bezug auf eine Grundfläche der Radbasiseinheit (2) um im Wesentlichen oder gleich eine Breite eines Rads (32a, 32b) versetzt ist.

9. Containerumschlagfahrzeug (401) nach einem der vorhergehenden Ansprüche, wobei der Hubrahmen (415) an Hebebändern (419) aufgehängt ist, und wobei sich der Hubrahmen (415) horizontal erstreckt und Greifvorrichtungen (420) und Eckenführungen (420) umfasst, wobei ein unterster Punkt der Eckenführungen (420) den untersten Teil des Hubrahmens (415) bereitstellt.

10. Containerumschlagfahrzeug (401) nach einem der vorhergehenden Ansprüche, wobei das Containerumschlagfahrzeug (401) eine Stützfläche (426) umfasst, wobei die Stützfläche (426) eine zweite Containertrageposition (426) bereitstellt.

11. Containerumschlagfahrzeug (401) nach Anspruch 10, wobei die zweite Containertrageposition (426) über der ersten Containertrageposition (425) angeordnet ist.

12. Automatisiertes Regalbedienungssystem (1), das ein zweidimensionales Schienensystem (108) umfasst, das einen ersten Satz von parallelen Schienen (110), der derart angeordnet ist, dass er eine Bewegung von Containerumschlagfahrzeugen (401) in einer ersten Richtung (X) über die Oberseite der Rahmenstruktur (100) führt, und einen zweiten Satz von parallelen Schienen (111), die senkrecht zu dem ersten Satz von Schienen (110) angeordnet sind, um eine Bewegung von Containerumschlagfahrzeugen (401) in einer zweiten Richtung (Y) zu führen, die senkrecht zu der ersten Richtung ist, umfasst, wobei die ersten und zweiten Sätze von parallelen Schienen (110, 111) das Schienensystem (108) in eine Mehrzahl von Gitterzellen (122) unterteilen, wobei das automatisierte Regalbedienungssystem eine Mehrzahl von Containerumschlagfahrzeugen (401) nach einem der vorhergehenden Ansprüche umfasst.

13. Verfahren zum Übertragen eines Lagercontainers (106) zwischen einem ersten und einem zweiten Containerumschlagfahrzeug (401) nach einem der Ansprüche 1-11, die auf einem automatisierten Regalbedienungssystem betrieben werden, das ein zweidimensionales Schienensystem (108) umfasst, das einen ersten Satz von parallelen Schienen (110), der derart angeordnet ist, dass er eine Bewegung von Containerumschlagfahrzeugen (401) in einer ersten Richtung (X) über die Oberseite der Rahmenstruktur (100) führt, und einen zweiten Satz von parallelen Schienen (111), die senkrecht zu dem ersten Satz von Schienen (110) angeordnet sind, um eine Bewegung von Containerumschlagfahrzeugen (401) in einer zweiten Richtung (Y) zu führen, die senkrecht zu der ersten Richtung ist, umfasst, wobei die ersten und zweiten Sätze von parallelen Schienen (110, 111) das Schienensystem (108) in eine Mehrzahl von Gitterzellen (122) unterteilen, wobei das Verfahren die folgenden Schritte umfasst:
- Verwenden eines Hauptsteuersystems zum Anweisen der ersten und zweiten Containerumschlagfahrzeuge (401), sich in benachbarten Gitterzellen (122) derart zu positionieren, dass die Hubvorrichtung (414) des ersten Containerumschlagfahrzeugs (401) direkt über der oberen Fläche des unteren Abschnitts (411) des zweiten Containerumschlagfahrzeugs (401) liegt;
- Übertragen eines Lagercontainers (106) zwischen der ersten Containertrageposition des unteren Abschnitts (411) des zweiten Containerumschlagfahrzeugs (401) und der Hubvorrichtung (414) des ersten Containerumschlagfahrzeugs (401).

14. Verfahren nach Anspruch 13, wobei der Schritt zum Übertragen eines Lagercontainers (106) zwischen der oberen Fläche des unteren Abschnitts (411) des zweiten Containerumschlagfahrzeugs (401) und der Hubvorrichtung (414) des ersten Containerumschlagfahrzeugs (401) die folgenden Schritte umfasst:
- Festlegen des Containerumschlagfahrzeugs (401), das den Lagercontainer (106) trägt oder stützt, als ein übergeordnetes Fahrzeug;
- Festlegen des anderen Containerumschlagfahrzeugs als ein untergeordnetes Fahrzeug;
- Senden eines Behälterholbefehls an das untergeordnete Fahrzeug;
- das untergeordnete Fahrzeug führt den Behälterholbefehl aus und aktualisiert seinen internen Status, wenn der Lagercontainer bestätigterweise auf dem Fahrzeug positioniert ist;
- das untergeordnete Fahrzeug sendet eine Bestätigung an das Steuersystem, wenn der Lagercontainer bestätigterweise derart auf dem Fahrzeug positioniert ist, dass der Lagercontainer ausreichend weit von der ersten Containertrageposition des übergeordneten Fahrzeugs entfernt ist;
- das übergeordnete Fahrzeug detektiert, dass der Lagercontainer fort ist, und sendet einen Behälteraktualisierungsstatus an das Steuersystem;
- das Steuersystem aktualisiert den logischen Zustand derart, dass er mit dem physischen Zustand des übergeordneten Fahrzeugs und des untergeordneten Fahrzeugs übereinstimmt.

15. Verfahren zum Übertragen eines Lagercontainers zwischen einem Containerumschlagfahrzeug (401) nach einem der vorhergehenden Ansprüche 1-11 und einer externen Containertrageposition, wobei das Containerumschlagfahrzeug auf einem automatisierten Regalbedienungssystem betrieben wird, das ein zweidimensionales Schienensystem (108) umfasst, das einen ersten Satz von parallelen Schienen (110), der derart angeordnet ist, dass er eine Bewegung von Containerumschlagfahrzeugen (401) in einer ersten Richtung (X) über die Oberseite der Rahmenstruktur (100) führt, und einen zweiten Satz von parallelen Schienen (111), die senkrecht zu dem ersten Satz von Schienen (110) angeordnet sind, um eine Bewegung von Containerumschlagfahrzeugen (401) in einer zweiten Richtung (Y) zu führen, die senkrecht zu der ersten Richtung ist, umfasst, wobei die ersten und zweiten Sätze von parallelen Schienen (110, 111) das Schienensystem (108) in eine Mehrzahl von Gitterzellen (122) unterteilen, wobei das Verfahren die folgenden Schritte umfasst:
- Verwenden eines Förderers auf der ersten Containertrageposition des unteren Abschnitts (411), um einen Lagercontainer (106) zwischen dem Containerumschlagfahrzeug (401) und einer externen Position außerhalb des Containerumschlagfahrzeugs (401) zu übertragen.

## Revendications

1. Véhicule de manutention de conteneurs (401) destiné à fonctionner sur un système de rail bidimensionnel (108) comprenant un premier jeu de rails parallèles (110) agencés pour guider le déplacement des véhicules de manutention de conteneurs (401) dans une première direction (X) à travers le sommet d'une structure de châssis (100), et un second jeu de rails parallèles (111) agencé perpendiculairement au premier jeu de rails parallèles (110) pour guider le déplacement des véhicules de manutention de conteneurs (401) dans une seconde direction (Y) qui est perpendiculaire à la première direction, les premier et second jeux de rails parallèles (110, 111) divisant le système de rail (108) en une pluralité de cellules de grille (122), dans lequel le véhicule de manutention de conteneurs (401) comprend :
- une unité de base de roue (2) comprenant des premier et second jeux de roues (32a, 32b) pour guider le véhicule de manutention de conteneurs (401) le long du système de rail (108) dans les première et seconde directions (X, Y) respectivement, dans lequel les premier et second jeux de roues (32a, 32b) forment des périphéries externes de l'unité de base de roue (2) ;
- une unité de corps (410) comprenant :
une section inférieure (411) qui est placée sur l'unité de base de roue (2), la section inférieure (411) ayant un encombrement avec une étendue horizontale qui est inférieur ou égal à l'unité de base de roue (2), la section inférieure (411) ayant une surface supérieure, la surface supérieure (425) offrant une première position de support de conteneur (425) pour supporter un conteneur de stockage (106) ;
une section de support (412) s'étendant verticalement depuis la section inférieure (411), la section de support (412) ayant un encombrement avec une étendue horizontale qui est inférieur à l'encombrement de la section inférieure (411) ; et
une section en porte-à-faux (413) s'étendant horizontalement depuis la section de support (412) au-delà de l'encombrement de la section inférieure (411) ; et
- un dispositif de levage (414) comprenant un cadre de levage (415) qui est suspendu depuis la section en porte-à-faux (413).

2. Véhicule de manutention de conteneurs (401) selon la revendication 1, dans lequel, lorsqu'un conteneur de stockage (106) est positionné sur la surface supérieure, une partie la plus élevée du conteneur de stockage (106) représente une première hauteur (h1) ; et
le dispositif de levage (414) comprend un cadre de levage (415) qui est suspendu depuis la section en porte-à-faux (413), le cadre de levage (415) ayant une partie la plus basse à une seconde hauteur (h2) lorsque le cadre de levage (415) est amarré dans une position supérieure adjacente à la section en porte-à-faux (413) ;
dans lequel la seconde hauteur (h2), lorsque le cadre de levage (415) est amarré dans sa position supérieure, est au-dessus de la première hauteur (h1), de sorte que la partie la plus basse d'un cadre de levage amarré (415) d'un premier véhicule de manutention de conteneurs (401) peut passer par-dessus la partie la plus élevée d'un conteneur de stockage (106) positionné sur la surface supérieure d'une section inférieure (411) de l'unité de corps (410) d'un second véhicule de manutention de conteneurs (401) lorsque les premier et second véhicules de manipulation de conteneurs (401) passent l'un au-dessus de l'autre sur des cellules de grille adjacentes (122) .

3. Véhicule de manutention de conteneurs (401) selon l'une quelconque des revendications précédentes, dans lequel la première position de support de véhicule (425) est évidée pour fournir un support latéral pour un conteneur de stockage (106) positionné sur la première position de support de conteneur (425).

4. Véhicule de manutention de conteneurs (401) selon l'une quelconque des revendications précédentes, dans lequel le dispositif de levage (414) comprend un moteur de dispositif de levage (416') et au moins deux arbres de levage (417), et dans lequel les au moins deux arbres de levage (417) sont disposés dans la section en porte-à-faux (413) et le moteur de dispositif de levage (416') est disposé dans la section inférieure (411), et dans lequel le moteur de dispositif de levage (416') et les au moins deux arbres de levage (417) sont reliés les uns aux autres par le biais d'un couplage d'entraînement (418) .

5. Véhicule de manutention de conteneurs (401) selon l'une quelconque des revendications précédentes, dans lequel le dispositif de levage (414) comprend un moteur de dispositif de levage (416'') et au moins deux arbres de levage (417) disposés dans la section en porte-à-faux (413) .

6. Véhicule de manutention de conteneurs (401) selon l'une quelconque des revendications précédentes, dans lequel l'unité de corps ((410) comprend un boîtier en forme de S reliant ensemble la section inférieure (411), la section de support (412) et la section en porte-à-faux (413) .

7. Véhicule de manutention de conteneurs (401) selon l'une quelconque des revendications précédentes, dans lequel la première position de support de conteneur (425) comprend un convoyeur (427) pour transférer un conteneur de stockage (106) entre la première position de support de conteneur (425) et un support externe.

8. Véhicule de manutention de conteneurs (401) selon l'une quelconque des revendications précédentes, dans lequel un encombrement de la section inférieure (413) de l'unité de corps (410) est déplacé par rapport à l'encombrement de l'unité de base de roue (2) d'une largeur égale ou sensiblement égale à une roue (32a, 32b) .

9. Véhicule de manutention de conteneurs (401) selon l'une quelconque des revendications précédentes, dans lequel le cadre de levage (415) est suspendu sur des bandes de levage (419), et dans lequel le cadre de levage (415) s'étend horizontalement et comprend des dispositifs de préhension (420) et des guides d'angle (420), dans lequel un point le plus bas des guides d'angle (420) fournit la partie la plus basse du cadre de levage (415).

10. Véhicule de manutention de conteneurs (401) selon l'une quelconque des revendications précédentes, dans lequel le véhicule de manutention de conteneurs (401) comprend une surface de support (426), dans lequel la surface de support (426) offre une seconde position de support de conteneur (426).

11. Véhicule de manutention de conteneurs (401) selon la revendication 10, dans lequel la seconde position de support de conteneur (426) est disposée au-dessus de la première position de support de conteneur (425).

12. Système automatique de stockage et de récupération (1) comprenant un système de rail bidimensionnel (108) comprenant un premier jeu de rails parallèles (110) agencés pour guider le déplacement des véhicules de manutention de conteneurs (401) dans une première direction (X) à travers le sommet de la structure de châssis (100), et un second jeu de rails parallèles (111) agencé perpendiculairement au premier jeu de rails parallèles (110) pour guider le déplacement des véhicules de manutention de conteneurs (401) dans une second direction (Y) qui est perpendiculaire à la première direction, les premier et second jeux de rails parallèles (110, 111) divisant le système de rail (108) en une pluralité de cellules de grille (122), dans lequel le système automatique de stockage et de récupération comprend une pluralité de véhicules de manutention de conteneurs (401) selon l'une quelconque des revendications précédentes.

13. Procédé de transfert d'un conteneur de stockage (106) entre un premier et un second véhicule de manutention de conteneurs (401) selon l'une quelconque des revendications 1 à 11 fonctionnant sur un système automatique de stockage et de récupération comprenant un système de rail bidimensionnel (108) comprenant un premier jeu de rails parallèles (110) agencés pour guider le déplacement des véhicules de manutention de conteneurs (401) dans une première direction (X) à travers le sommet de la structure de châssis (100), et un second jeu de rails parallèles (111) agencé perpendiculairement au premier jeu de rails parallèles (110) pour guider le déplacement des véhicules de manutention de conteneurs (401) dans une seconde direction (Y) qui est perpendiculaire à la première direction, les premier et second jeux de rails parallèles (110, 111) divisant le système de rail (108) en une pluralité de cellules de grille (122), dans lequel le procédé comprend les étapes suivantes :
- l'utilisation d'un système de commande principal pour donner l'instruction aux premier et second véhicules de manutention de conteneurs (401) de se positionner dans des cellules de grille voisines (122) de sorte que le dispositif de levage (414) du premier véhicule de manutention de conteneurs (401) soit directement au-dessus de la surface supérieure de la section inférieure (411) du second véhicule de manutention de conteneurs (401) ;
- le transfert d'un conteneur de stockage (106) entre la première position de support de conteneur de la section inférieure (411) du second véhicule de manutention de conteneurs (401) et le dispositif de levage (414) du premier véhicule de manutention de conteneurs (401).

14. Procédé selon la revendication 13, dans lequel l'étape de transfert d'un conteneur de stockage (106) entre la surface supérieure de la section inférieure (411) du second véhicule de manutention de conteneurs (401) et le dispositif de levage (414) du premier véhicule de manutention de conteneurs (401) comprend les étapes suivantes :
- le réglage du véhicule de manutention de conteneurs (401) portant ou supportant le conteneur de stockage (106) en tant que véhicule maître ;
- le réglage de l'autre véhicule de manutention de conteneurs en tant que véhicule esclave ;
- l'envoi d'une instruction d'obtention de bac au véhicule esclave ;
- l'exécution par le véhicule esclave de l'instruction d'obtention de bac et la mise à jour de son statut interne lorsque le conteneur de stockage est confirmé comme positionné sur le véhicule ;
- l'envoi par le véhicule esclave d'une confirmation au système de commande lorsque le conteneur de stockage est dans la position confirmée sur le véhicule de sorte que le conteneur de stockage soit suffisamment dégagé de la première position de support de conteneur du véhicule maître ;
- la détection par le véhicule maître que le conteneur de stockage est parti et qu'il va envoyer un statut de mise à jour de bac au système de commande ;
- la mise à jour par le système de commande de l'état logique pour le faire correspondre à l'état physique du véhicule maître et du véhicule esclave.

15. Procédé de transfert d'un conteneur de stockage entre un véhicule de manutention de conteneurs (401) selon l'une quelconque des revendications 1 à 11 et une position de support de conteneur externe, le véhicule de manutention de conteneurs fonctionnant sur un système automatique de stockage et de récupération comprenant un système de rail bidimensionnel (108) comprenant un premier jeu de rails parallèles (110) agencés pour guider le déplacement des véhicules de manutention de conteneurs (401) dans une première direction (X) à travers le sommet de la structure de châssis (100), et un second jeu de rails parallèles (111) agencé perpendiculairement au premier jeu de rails parallèles (110) pour guider le déplacement des véhicules de manutention de conteneurs (401) dans une seconde direction (Y) qui est perpendiculaire à la première direction, les premier et second jeux de rails parallèles (110, 111) divisant le système de rail (108) en une pluralité de cellules de grille (122), dans lequel le procédé comprend les étapes suivantes :
- l'utilisation d'un convoyeur sur la première position de support de conteneur de la section inférieure (411) pour transférer un conteneur de stockage (106) entre le véhicule de manutention de conteneurs (401) et une position externe à l'extérieur du véhicule de manutention de conteneurs (401).
